# EUROPEAN PATENT APPLICATION

(11) **EP 2 360 376 A1**
(43) Date of publication of application: **24.08.2011**
(21) Application number: 09793818.7
(22) Date of filing: 30.06.2009
(51) Int. Cl.: F03G 7/04, F03G 6/00

(54) **A DEVICE PRODUCING ENERGY THROUGH THE TEMPERATURE DIFFERENCE OF FLUIDS**

(30) Priority: 10.07.2008 CN 200810126888
(71) Applicant: Chang, Chung Ho, 1210 Wien (AT); Stuhr, Wilhelm, 1210 Wien (AT)
(72) Inventor: STUHR, Wilhelm, 1210 Wien (AT); CHANG, Chung Ho, 1210 Wien (AT)
(86) International application number: PCT/CN2009/072525
(87) International publication number: WO 2010/003343

(57) **Abstract**

An device producing energy through the temperature difference of fluids includes: an equipment producing differences in gas pressure (100) which produces differences in gas pressure through the use of a heat source; an equipment producing high-pressure gas (500) which produces said high-pressure gas through the differences in gas pressure from the equipment producing differences in gas pressure (100); a pressure-storing equipment (600) which is used to store the high-pressure gas produced from the equipment producing high-pressure gas (500); and an energy-producing equipment (700) which can be rotated by the high-pressure gas stored in the pressure-storing equipment (600). The device makes effective use of energy.

## Description

This application claims priority to Chinese Patent Application No. 200810126888.8 entitled in "A DEVICE FOR PRODUCING ENERGY THROUGH THE TEMPERATURE DIFFERENCE OF FLUIDS", which was filed on July 10, 2008. The aforementioned application is herein incorporated by reference in its entirety.

### FIELD OF THE INVENTION

The invention relates to a device for producing energy, and more particularly, to a device for producing energy through temperature difference of fluids.

### BACKGROUND OF THE INVENTION

Recently, effective utilization of energy source, especially thermal energy, has attracted more and more attention, and solar energy gets more favor as a clean energy source. In prior art, there have been various devices that produce energy, such as mechanical energy or electric energy, by using solar energy and other thermal energy. As an example, Chinese Patent Gazette CN1671573A discloses a waste heat solar energy system for recovering electric energy from low-grade waste heat/solar energy. The waste heat solar energy system includes a closed-cycle refrigerant loop, wherein pressurized refrigerant fluid is pumped at ambient temperature through a heat exchanger connected to a waste heat/solar source, and the refrigerant fluid converts to high pressure gas by absorbing thermal energy during conversion. Heated/pressurized refrigerant gas is inlet into an expander to power an output shaft during the expansion of the fluid to cooled gas. Other cooled refrigerant is condensed to liquid at low pressure and ambient temperature, and recycled under pressure to the heat exchanger. The expander is a reverse-plumbed gas compressor. The pressurized, hot refrigerant gas is inlet at what is ordinarily its outlet, and the normal inlet becomes the expander end. The refrigerant gas pressure/temperature drop spins the expander shaft for direct mechanical power take-off, or coupling to a synchronous or inductive generator to produce electricity. However, the waste heat solar energy system has the drawback of non-stable energy output, which will influence the output stability of an end energy producing apparatus such as a motor or a generator and the like.

Therefore, there is a need for a device being able to effectively utilize solar energy and other waste heat source to produce energy and make the energy output more stable.

### SUMMARY OF THE INVENTION

The invention is directed to provide a novel device for producing energy through heat source, which is able to not only effectively utilize solar energy and other waste heat source to produce energy, but also ensure to stably output energy such as mechanical energy, electric energy or the like.

To this end, the invention provides a device for producing energy through temperature difference of fluids, the device including a gas pressure difference producing apparatus for producing a difference in gas pressure by using a heat source; a high-pressure gas producing apparatus connected with the gas pressure difference producing apparatus via gas pipeline, the high-pressure gas producing apparatus producing high-pressure gas through the difference in gas pressure from the gas pressure difference producing apparatus; a pressure-storing apparatus connected with the high-pressure gas producing apparatus via gas pipeline, the pressure-storing apparatus storing the high-pressure gas produced from the high-pressure gas producing apparatus; and an energy-producing apparatus connected with the pressure-storing apparatus, the energy-producing apparatus producing energy under the action of the high-pressure gas stored in the pressure-storing apparatus.

Preferably, the heat source is a hot fluid source, and the gas pressure difference producing apparatus includes: a high-pressure gas producing component including at least one hot fluid source and at least one first heat exchanger, wherein each of the at least one hot fluid source is connected to a corresponding one of the at least one first heat exchanger, and wherein the first heat exchanger is filled with pressurized gas, and each of the at least one first heat exchanger is connected to the high-pressure gas producing apparatus via a first valve and through a first common gas pipeline; a low-pressure gas producing component including at least one cool fluid source and at least one second heat exchanger, wherein each of the at least one cool fluid source is connected to a corresponding one of the at least one second heat exchanger, and wherein the second heat exchanger is filled with pressurized gas, and each of the at least one second heat exchanger is connected to the high-pressure gas producing apparatus via a second valve and through a second common gas pipeline; wherein, in operating state, each of the at least one hot fluid source heats each of the at least one first heat exchanger connected thereto, so as to pressurize gas in each of the at least one first heat exchanger, and wherein each of the at least one cool fluid source cools each of the at least one second heat exchanger connected thereto, so as to depressurize gas in each of the at least one second heat exchanger, such that the difference in gas pressure is formed between the high-pressure gas producing component and the low-pressure gas producing component.

More preferably, the high-pressure gas producing apparatus is a primary cylinder assembly, and the primary cylinder assembly includes: a primary cylinder in which a primary piston is arranged, wherein the primary cylinder is connected to the first common gas pipeline via a third valve or a fourth valve, and is connected to the second common gas pipeline via a fifth valve or a sixth valve, and wherein the third valve and the fifth valve are connected to a left side of the primary cylinder, and the fourth valve and the sixth valve are connected to a right side of the primary piston; a first compressor which is arranged to be integrally connected to the left side of the primary cylinder and is provided with a first piston, wherein the first compressor is adapted to output high-pressure gas when the first piston moves left; a second compressor which is arranged to be integrally connected to the right side of the primary cylinder and is provided with a second piston, wherein the second compressor is adapted to output high-pressure gas when the second piston moves right, and wherein the second compressor is connected to the pressure-storing apparatus via one-way valve at a right side of the second piston, such that high-pressure gas can only flow into the pressure-storing apparatus in one-way; an air filter which is connected to a left side of the first compressor via one-way valve such that outside air filtered by the air filter flows into the first compressor in one-way, wherein the primary piston is arranged to be integrated with the first piston and the second piston through a first linkage, which is arranged to pass through the side wall of the primary cylinder in an airtight manner, and wherein the first compressor is connected to the right side of the second piston of the second compressor at the left side of the first piston via one-way valve, such that gas can only flow in one-way from the left side of the first compressor to the right side of the second compressor.

More preferably, the pressure-storing apparatus includes at least one high-pressure gasholder, and a ninth valve and a tenth valve are arranged at an inlet and an outlet of each of the at least one high-pressure gasholder respectively.

More preferably, the energy-producing apparatus is a pneumatic motor which is connected to the high-pressure gasholder via a pressure regulating apparatus arranged downstream of the high-pressure gasholder, such that the pneumatic motor rotates under the action of high-pressure gas stored in the high-pressure gasholder.

Alternatively, the energy-producing apparatus includes: an auxiliary cylinder assembly which is connected to the high-pressure gasholder via gas pipeline for converting gas pressure in the high-pressure gasholder into hydraulic pressure, the auxiliary cylinder assembly including: an auxiliary cylinder in which an auxiliary piston is arranged, wherein the auxiliary cylinder is connected to the high-pressure gasholder via a seventh valve and a eighth valve, the seventh is connected to the left side of the auxiliary piston and the eighth valve is connected to the right side of the auxiliary piston; a third compressor which is arranged to be connected to the left side of the auxiliary cylinder in an airtight manner and is provided with a third piston, wherein the third compressor is adapted to output pressurized liquid when the third piston moves left; a fourth compressor which is arranged to be connected to the right side of the auxiliary cylinder in an airtight manner and is provided with a fourth piston, wherein the fourth compressor is adapted to output pressurized liquid when the fourth piston moves left; a hydraulic motor which is connected to the auxiliary cylinder assembly and rotates under the action of the pressurized liquid output from the auxiliary cylinder assembly; wherein the auxiliary piston is arranged to be integrated with the third piston and the fourth piston through a second linkage, which is arranged to pass through the side wall of the auxiliary cylinder in airtight manner. Additionally, the energy-producing apparatus further includes a generator which is arranged downstream of the hydraulic motor and is driven by the hydraulic motor to rotate and generate electricity.

More preferably, a first cycle pump is arranged between each of the at least one first heat exchanger and each of the at least one hot fluid source connected with the first heat exchanger, wherein the first cycle pump is adapted to makes hot fluid in the hot fluid source circularly flow into the first heat exchanger; and a second cycle pump is arranged between each of the at least one second heat exchanger and each of the at least one cool fluid source connected with the first heat exchanger, wherein the second cycle pump is adapted to make cool fluid in the cool fluid source circularly flow into the second heat exchanger.

Preferably, the hot fluid in the hot fluid source is hot water from a solar collector, or cooling water in a power plant for cooling devices; and the cool fluid in the cool fluid sources is cool water in an underground cooling battery for buildings.

Preferably, each of the at least one first heat exchanger and each of the at least one second heat exchanger are connected to the high-pressure gasholder via one-way valves, in order to fill the first heat exchanger and the second heat exchanger with gas in an initial state and when leakage occurs.

Preferably, the device further includes an equalizing valve connected between each of the at least one first heat exchanger and each corresponding one of the at least one second heat exchanger, wherein the equalizing valve is adapted to make gas pressure in each of the at least one first heat exchanger equal to gas pressure in each corresponding one of the at least one second heat exchanger after the primary piston in the primary cylinder completes a stroke.

Preferably, the gas pressure output from the first compressor is 60 bars; and the gas pressure output from the second compressor is 200 bars.

Preferably, the device further includes an electronic control unit for controlling the first to the tenth valves, and position sensors are arranged at the left side of the first compressor and the right side of the second compressor, wherein when the primary piston moves together with the first piston and the second piston to the left side, the position sensor at the left side sends a control signal to the electronic control unit such that the electronic control unit sequentially performs following operations: closing one or more of the first valves and corresponding one or more of the second valves; closing the fourth valve and the fifth valve; opening corresponding one or more of the equalizing valves; closing the corresponding one or more of the equalizing valves; opening the third valve, the sixth valve, and opening the next one or more of the first valves and corresponding next one or more of the second valves; and when the primary piston moves together with the first piston and the second piston to the right side, the position sensor at the right side sends a control signal to the electronic control unit, such that the electronic control unit sequentially performs following operations: closing one or more of the first valves and corresponding one or more of the second valves; closing the third valve and the sixth valve; opening corresponding one or more of the equalizing valves; closing the corresponding one or more of the equalizing valves; and opening the fourth valve, the fifth valve, and opening the next one or more of the first valves and corresponding next one or more of the second valves.

Preferably, each of the at least one high-pressure gasholder is provided with a pressure sensor, wherein when pressure in at least one high-pressure gasholder in operating state reaches a predetermined value, the corresponding pressure sensor sends a control signal to the electronic control unit, such that the electronic control unit sequentially performs following operations: closing the ninth valve at the inlet of the high-pressure gasholder with pressure reaching the predetermined value; opening the tenth valve at the outlet of the high-pressure gasholder with pressure reaching the predetermined value; opening the ninth valve at the inlet of at least one high-pressure gasholder other than the high-pressure gasholder with pressure reaching the predetermined value.

Preferably, a pressure switch is arranged at the inlet of each of the at least one high-pressure gasholder, and each of the ninth valve keeps always open, wherein when pressure in at least one high-pressure gasholder in operating state reaches a predetermined value, the corresponding pressure switch automatically closes and sends a control signal to the electronic control unit, such that the electronic control unit sequentially performs following operations: opening the tenth valve at the inlet of the high-pressure gasholder with pressure reaches the predetermined value; and opening the pressure switch at the inlet of at least one high-pressure gasholder other than the high-pressure gasholder with pressure reaching the predetermined value.

Preferably, the device further includes an electronic control unit for controlling the first to the tenth valves, and limit switches are arranged at the left side of the third compressor and the right side of the fourth compressor. When the auxiliary piston moves together with the third piston and the fourth piston to the left side, the programmable logic controller opens the seventh valve and closes the eighth valve in response to the limit switch at the left side; and when the auxiliary piston moves together with the third piston and the fourth piston to the right side, the programmable logic controller opens the eighth valve and closes the seventh valve in response to the limit switch at the right side.

In accordance with the device having the above structure of the present invention, even when the heat input at the gas pressure difference producing apparatus is not stable, due to the gas pressure difference producing apparatus being connected downstream to the high-pressure gas producing apparatus and the pressure-storing apparatus other than being directly connected to the end energy producing apparatus, the effect on output stability of the end energy producing apparatus is avoided, and hence solar energy and other heat sources may be effectively used, and energy such as mechanical energy or electric energy may be output stably. Additionally, in accordance with the device of the present invention, during pressurization hot air may be obtained from downstream of the gas pressure difference producing apparatus, and the hot air may be used in a heating system in buildings or vehicles, or may be adapted to heat water by a heat exchanger; during depressurization cool air may be obtained from the downstream of the pressure-storing apparatus, and the cool air may be used in air-condition systems in buildings and vehicles.

### BRIEF DESCRIPTION OF THE DRAWINGS

FIG. 1 is a schematic diagram of a device for producing energy through temperature difference of fluids according to the invention.
FIG 2 is a partial schematic diagram of the device in Fig.1 at the end of a stroke.
FIG.3 is a partial schematic diagram of the device in Fig.1 at the end of another stroke.

### DETAILED DESCRIPTION OF THE INVENTION

Embodiments of the invention are described hereinafter with reference to the accompanying drawings. It should be appreciated that the invention is not to be limited to the described embodiments, and various modifications and variations of the invention could be made by those skilled in the art without departing from the scope as defined by the appended claims.

### General Structure

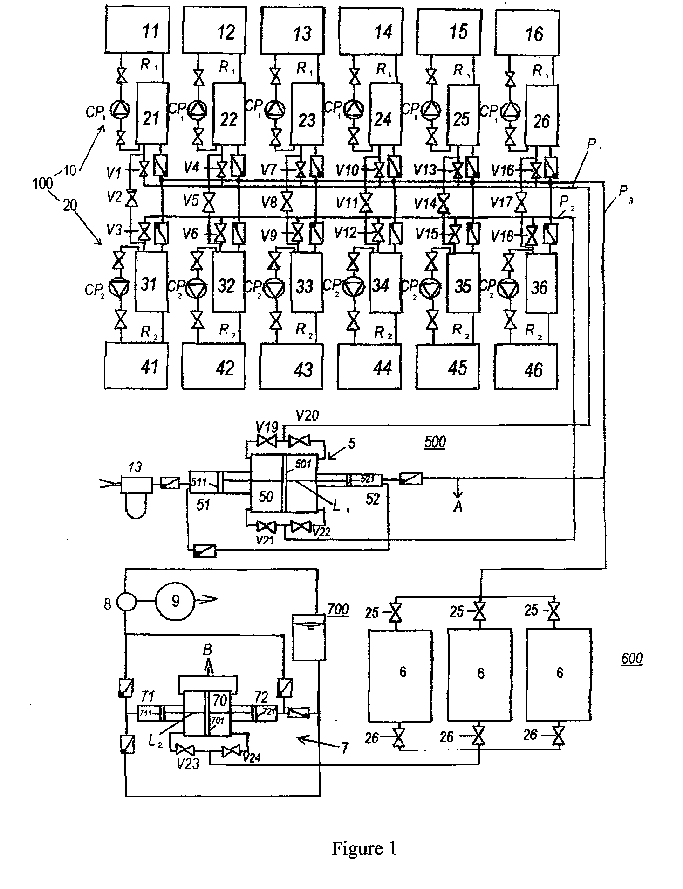

Referring first to Fig.1, Fig.1 shows a schematic diagram of a device for producing energy through temperature difference of fluids according to the invention. The device includes a gas pressure difference producing apparatus 100 for producing a difference in gas pressure by using a heat source; a high-pressure gas producing apparatus 500 connected with the gas pressure difference producing apparatus 100 via gas pipeline, which produces a high-pressure gas through the difference in gas pressure from the gas pressure difference producing apparatus 100; a pressure-storing apparatus 600 connected with the high-pressure gas producing apparatus via gas pipeline, which is adapted to store the high-pressure gas produced from the high-pressure gas producing apparatus 500; and an energy-producing apparatus 700 connected with the pressure-storing apparatus 600 via gas pipeline, which may be rotated by the high-pressure gas stored in the pressure-storing apparatus 600.

### Gas pressure difference producing apparatus

As shown in Fig.1, the gas pressure difference producing apparatus 100 includes a high-pressure gas producing component 10 and a low-pressure gas producing component 20. It should be noted that the "high-pressure" in the "high-pressure gas producing component 10" means that the gas pressure produced in the component is higher than that in the "low-pressure gas producing component 20".

The high-pressure gas producing component 10 includes at least one of hot fluid sources 11-16 and at least one of first heat exchangers 21-26. As shown, each of the at least one hot fluid source is connected to a corresponding one of the at least one first heat exchanger via a first cycle pump CP1. Particularly, the hot fluid source 11 is connected to the first heat exchanger 21, and the hot fluid source 12 is connected to the first heat exchanger 22, and so on. Further, each first heat exchanger is connected to each corresponding hot fluid source via a recycle pipeline R1, such that hot fluid recycles into each hot fluid source after heat exchange. The function of the first cycle pump CP1 is to make the hot fluid in the hot fluid source circularly flow into the first heat exchanger, such that the first heat exchanger is heated to increase pressure of pressurized-gas in the first heat exchanger. Although the hot fluid sources shown in Fig.1 are solar collectors used to provide hot water to the first heat exchangers. It should be understood that the hot fluid sources may also be other heat sources capable of providing hot fluid such as a cooling water system for power plant. Additionally, although six hot fluid sources and six first heat exchangers are shown, it should be understood that the invention is not so limited. According to specific applications, any number of hot fluid sources and first heat exchangers may be arranged in the device. As shown, each first heat exchanger is connected to a high-pressure gas producing apparatus 500 via a respective one of first valves V1, V4, V7, V10, V13, V16 and through a first common gas pipeline P1. The valves are conventional valves, such as ball valves or the like, for switching on/off fluid.

The low-pressure gas producing component 20 includes at least one of cool fluid sources 41-46 and at least one of second heat exchangers 31-36. As shown in Fig.1, each cool fluid source is connected to each corresponding second heat exchanger via a second cycle pump CP2. Particularly, the cool fluid source 41 is connected to the second heat exchanger 31, and the cool fluid source 42 is connected to the second heat exchanger 32, and so on. Further, each second heat exchanger is connected to each corresponding cool fluid source via a recycle pipeline R2, such that cool fluid recycles into each cool fluid source after heat exchange. The function of the second cycle pump CP2 is to make the cool fluid in the cool fluid source circularly flow into the second heat exchanger, such that the second heat exchanger is heated to decrease pressure of pressurized-gas in the second heat exchanger. Although the cool fluid sources shown in Fig.1 are underground cooling batteries used in buildings to provide cool water, it should be understood that the cool fluid sources may also be other cool fluid sources capable of providing cool fluid. Similarly, although six cool fluid sources and six second heat exchangers are shown, it should be understood that the invention is not so limited. According to specific applications and the number of the hot fluid sources and the first heat exchangers, any number of cool fluid sources and second heat exchangers may be arranged in the device, and the number of cool fluid sources and second heat exchangers may not equal to the number of hot fluid sources and first heat exchangers. As an example, the number of first heat exchangers may be twice of the number of second heat exchangers. As shown, each second heat exchanger is connected to the high-pressure gas producing apparatus 500 via a respective one of second valves V3, V6, V9, V12, V15, V18 and through a second common gas pipeline P2. The valves are conventional valves, such as ball valves or the like, for switching on/off fluid.

From the above description, it is apparent that the hot fluid circularly flows through one side of the first heat exchanger so as to heat the gas filled in another side of the first heat exchanger via heat exchange and to pressurize the gas. Similarly, the cool fluid circularly flows through one side of second heat exchanger so as to cool the gas at another side of the second heat exchanger via heat exchange and to depressurize the gas. Accordingly, with equal initial pressures, a pressure difference will be generated between the gas in the first heat exchanger and the gas in the second heat exchanger.

Additionally, as shown, the side filled with gas of each first heat exchanger is connected to the side filled with gas of each corresponding second heat exchanger via a respective one of equalizing valves V2, V5, V8, V11, V14, V17, which are adapted to equalize gas pressure in a pair of corresponding first and second heat exchanger respectively. As an example, from Fig. 1, it may be clearly seen that the gas pressures in the first heat exchanger 21 and the second heat exchanger 31 become equal to each other when the valve V2 is opened. From Fig. 1, it may also be seen that each of the first heat exchangers 21-26 and each of the second heat exchangers 31-36 are connected to a common pipeline P3 via one-way valves, and then connected to a pressure-storing apparatus 600 via the common pipeline. The a plurality of one-way valves only allow gas to flow in one-way from the pressure-storing apparatus 600 into the first heat exchangers and the second heat exchangers, in order to fill the first heat exchangers and the second heat exchangers before the device starts up or when leakage occurs. Accordingly, a pressure regulating apparatus (not shown) may be arranged on the common pipeline at a side close to the pressure-storing apparatus 600, so that gas with given pressure may be input to the first heat exchanger and the second heat exchanger according to particular situations.

It should be noted that the function of the above heat source and cool source is to form a temperature difference of air (high-pressure gas), so the solar collector and the underground cooling battery for building are merely provided as examples. It will be apparent to those skilled in the art that any environment and/or device capable of forming a certain temperature difference may function as the heat source and cool source in the invention. For example, useful temperature difference may be formed between a location irradiated by sunlight and a location not irradiated by sunlight at outdoor. Similarly, the sunny side and the dark side of a building, outdoor and indoor, ground and underground, overwater and underwater, and even geothermal energy, wind and rain may all form temperature differences to function as the heat source and cool source in the invention.

### High-pressure gas producing apparatus

A high-pressure gas producing apparatus 500 may be a cylinder assembly, and the high-pressure gas producing apparatus shown in figure is a primary cylinder assembly 5. The primary cylinder assembly 5 includes a primary cylinder 50, a first compressor 51, a second compressor 52 and an air filter 13.

A primary piston 501 is arranged in the primary cylinder 50. The primary cylinder 50 is connected to a first common gas pipeline P1 via a third valve V19 or a fourth valve V20, to a second common gas pipeline P2 via a fifth valve V21 or a sixth valve V22. The third valve V19 and the fifth valve V21 are connected to the left side of the primary piston 501, and the fourth valve V20 and the sixth valve V22 are connected to the right side of the primary piston 501. The first compressor 51 is arranged to be integrally connected to the left side of the primary cylinder 50 and is provided with a first piston 511. The first compressor 51 is adapted to output high-pressure gas when the first piston moves left. The second compressor 52 is arranged as being integrally connected to the right side of the primary cylinder 50 and is provided with a second piston 521. The second compressor 52 is adapted to output high-pressure gas when the second piston moves right. In addition, the second compressor 52 is connected to the pressure-storing apparatus 600 via a one-way valve at the right side of the second piston 521, such that high-pressure gas may only flow into the pressure-storing apparatus 600 in one-way. The air filter 13 is connected to the left side of the first compressor 51 via a one-way valve, by which outside air filtered by the air filter 13 flows into the first compressor 51 in one-way. The primary piston 501 is arranged to be integrated with the first piston 511 and the second piston 521 through a first linkage L1, which is arranged as passing through the side wall of the primary cylinder 50 in an airtight manner. The first compressor 51 is connected to the right side of the second piston 521 in the second compressor 52 at the left side of the first piston 511 via a one-way valve, such that gas may only flow in one-way from the first compressor 51 to the second compressor 52.

In a preferred embodiment, the gas pressure output from the first compressor 51 is 60 bars; and the gas pressure output from the second compressor 52 is 200 bars. When the three pistons integrally move left, the first compressor 51 outputs high-pressure gas of 60 bars, which flows into the right side of the second compressor 52 via the one-way valve connected between the first compressor 51 and the second compressor 52, and finally flows into the pressure-storing apparatus 600. When the pistons integrally move right, the second compressor 52 outputs high-pressure gas of 200 bars, at the same time the first compressor 51 absorbs via the one-way valve the outside air filtered by the air filter 13.

Experiments show that during operation of the device of the present invention, when a temperature difference between the above cool source and heat source reaches 2.5°C, the primary cylinder assembly 5 may cause a pendulum movement (the left and right movement of the piston) to output high-pressure gas; when the temperature difference reaches 10°C, the primary cylinder assembly 5 may cause a standard pendulum movement. The pendulum movement becomes stronger as the temperature difference increases, resulting higher output power. Therefore, as described above, any environment and/or device capable of forming a certain temperature difference (about 2.5°C) may function as the heat source and cool source in the invention.

### Pressure-storing apparatus

The pressure-storing apparatus 600 includes at least one (only three are shown for clarity) high-pressure gas storage apparatus of any well-known type, such as a high-pressure gasholder 6 or the like, which is used to store high-pressure gas output from the compressor 51 and the compressor 52. As described above, the high-pressure gasholder 6 is further connected to the first heat exchanger and the second heat exchanger via a plurality of one-way valves, in order to fill the first heat exchanger and the second heat exchanger with gas in the initial state and when leakage occurs.

Further, as shown in Fig. 1, the inlet and outlet of each high-pressure gasholder 6 are provided with a ninth valve 25 and a tenth valve 26 respectively. The ninth valve 25 is used to control on/off state of high-pressure gas flowing from the primary cylinder assembly 5 to the high-pressure gasholder 6, and the tenth valve 26 is used to control on/off state of high-pressure gas flowing from the high-pressure gasholder 6 to the energy-producing apparatus. During operation, the ninth valves 25 at the inlets of one or more high-pressure gasholders 6 may be opened simultaneously such that the high-pressure gas produced in the primary cylinder assembly 5 flows to the one or more high-pressure gasholders 6. For example, the ninth valve 25 at the inlet of a left high-pressure gasholder 6 is opened first; when the gas pressure in the left high-pressure gasholder 6 reaches a predetermine value, the ninth valve 25 at the inlet of the left high-pressure gasholder 6 is closed and the tenth valve 26 at the outlet of the left high-pressure gasholder 6 is opened, and the ninth valve 25 at the inlet of a middle high-pressure gasholder 6 is opened. At this time, the left high-pressure gasholder 6 transfers high-pressure gas to a downstream energy-producing apparatus, and high-pressure gas produced in the primary cylinder assembly 5 flows into the middle high-pressure gasholder 6. By analogy, when the middle high-pressure gasholder 6 transfers high-pressure gas to the downstream energy-producing apparatus, high-pressure gas produced in the primary cylinder assembly 5 flows into the right high-pressure gasholder 6. As such the high-pressure gasholders 6 may be circularly used to ensure continuous and steady transferring of high-pressure gas to the downstream energy-producing apparatus.

### Energy-producing apparatus

In an embodiment, the energy-producing apparatus 700 includes an auxiliary cylinder assembly 7 and a hydraulic motor 8. The auxiliary cylinder assembly 7 is connected to the high-pressure gasholder 6 for converting the gas pressure in the high-pressure gasholder 6 into hydraulic pressure. The hydraulic motor 8 is connected to the auxiliary cylinder assembly 7 and is rotated by the pressurized liquid output from the auxiliary cylinder assembly 7. As shown, the hydraulic motor 8 is connected to a generator 9 and drives the generator 9 to rotate and generate electricity. It should be understood that the hydraulic motor 8 may also function as a direct power supply for driving other end devices to rotate.

The auxiliary cylinder assembly 7 includes an auxiliary cylinder 70, a third compressor 71 and a fourth compressor 72. An auxiliary piston 701 is arranged in the auxiliary cylinder 70. The auxiliary cylinder 70 is connected to the high-pressure gasholder 6 via a seventh valve V23 and a eighth valve V24. As shown, the seventh V23 is connected to the left side of the auxiliary piston 701 and the eighth valve V24 is connected to the right side of the auxiliary piston 701. The third compressor 71 is arranged as being connected to the left side of the auxiliary cylinder 70 in an airtight manner and is provided with a third piston 711. The third compressor 71 is adapted to output pressurized liquid when the third piston 711 moves left. The fourth compressor 72 is arranged as being connected to the right side of the auxiliary cylinder 70 in an airtight manner and is provided with a fourth piston 721. The fourth compressor 72 is adapted to output pressurized liquid when the fourth piston 721 moves left. The auxiliary piston 701 is arranged as being integrated with the third piston 711 and the fourth piston 721 through a second linkage L2, which is arranged as passing through the side wall of the auxiliary cylinder 7 in an airtight manner. Moreover, it should be noted that the structures of the third compressor 71 and the fourth compressor 72 are similar to that of the first compressor 51 and the second compressor 52, except that the third compressor 71 and the fourth compressor 72 are liquid compressors which output pressurized liquid such as hydraulic oil. Additionally, as shown, the third compressor 71 is connected to a reservoir 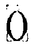 and the hydraulic motor 8 via two one-way valves; and the fourth compressor 72 is also connected to the reservoir 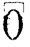 and the hydraulic motor 8 via two one-way valves. Therefore, when the pistons move left the third compressor 71 outputs pressurized liquid and the fourth compressor 72 absorbs liquid from the reservoir; and when the pistons move right the fourth compressor 72 outputs pressurized liquid and the third compressor 71 absorbs liquid from the reservoir.

In another embodiment, the energy-producing apparatus 700 is a pneumatic motor which is connected to the high-pressure gasholder 6 via a pressure regulating apparatus (not shown) arranged downstream of the high-pressure gasholder 6. Accordingly, the pneumatic motor is rotated by the high-pressure gas stored in the high-pressure gasholder 6. As described above, the pneumatic motor may be connected to the generator 9 and drives the generator 9 to rotate and generate electricity. Meantime the pneumatic motor may also function as a direct power supply to drive other end devices to rotate.

### Operating process

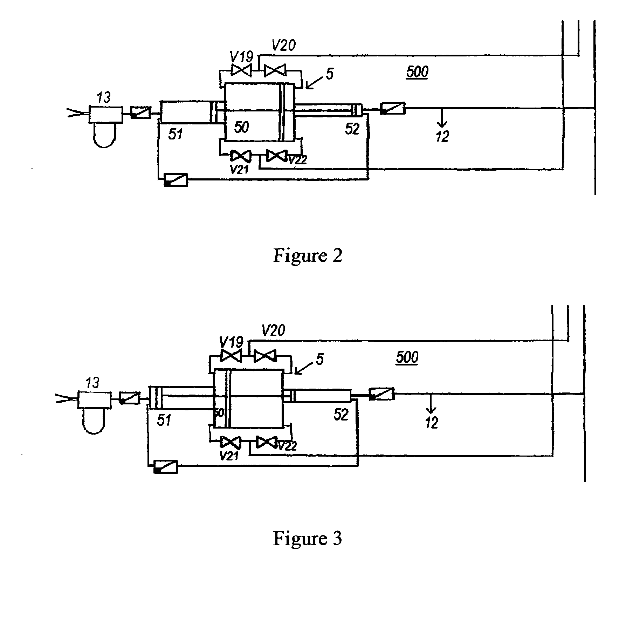

An exemplary operating process of the device is described with reference to the drawings. In the exemplary operating process, a first group of a first heat exchanger 21 and a second heat exchanger 31 are turned on first; then a second group of a first heat exchanger 22 and a second heat exchanger 32 are applied; next is a third group, and so on; and finally, the operation returns to the first group of the first heat exchanger 21 and the second heat exchanger 31 again. With reference to Figures 1 to 3, a specific operating process of the device according to the present invention includes the following steps:
Step 1: a pressure regulating apparatus (not shown) arranged upstream of the pressure-storing apparatus 600 is turned on to fill the first heat exchangers and the second heat exchangers with gas of given pressure through a number of one-way valves. In a preferred embodiment, the pressures of gas initially filled into the first heat exchangers and the second heat exchangers are both 200 bars. However, it should be understood that the invention is not so limited. Gas in the heat exchangers may have other pressures and the gas pressure in the first heat exchanger may be slightly higher than that in the second heat exchanger.
Step 2: the first valve V1 and the second valve V3 as well as the third valve V 19 and the sixth valve V22 are opened, and the first valves V4, V7, V10, V 13, V16, the second valves V6, V9, V12, V15, V18 as well as the equalizing valves V2, V5, V8, V11, V14, V17 are closed. A corresponding first cycle pump CP1 circularly transfers hot water produced in a solar collector 11 to a first heat exchanger 21 so as to increase the gas pressure (to above 200 bars) in the first heat exchanger 21. At the same time a corresponding second cycle pump CP2 circularly transfers cool water in a cooling battery 41 to a second heat exchanger 31 so as to decrease the gas pressure (to below 200 bar) in the second heat exchanger 31. As shown, since the third valve V19 and the sixth valve V22 are opened while the fourth valve V20 and the fifth valve V21 are closed, the pressure at the left side of the primary cylinder 50 is higher than that at the right side, which causes the primary piston 501 in the primary cylinder 50 to move right from a equalized state. As shown in Fig.2, the rightward movement of the primary piston 501 causes the first piston 511 and the second piston 521 to move right as well, because the primary piston 501 is arranged as being integrated with the first piston 511 and the second piston 521 via a leakage. As described above, when the pistons integrally move right, the second compressor 52 inputs high-pressure gas into the pressure-storing apparatus 600, while the first compressor absorbs outside air via the air filter 13. One stroke ends when the primary piston 501 arrives at the right side of the primary cylinder 50. Additionally, as shown in Fig.3, it is also possible that the fourth valve V20 and the fifth valve V21 are opened first, and in this case the pressure at the right side of the primary cylinder 50 is higher than that at the left side, and the primary piston 501, the first piston 511 and the second piston 521 would move left.
Step 3: as described above, when the primary piston 501 arrives at the right side of the primary cylinder 50, the third valve V19, the sixth valve V22, the first valve V1 and the second valve V3 are closed, and the equalizing valve V2 is opened for a while until the pressures in the first heat exchanger 21 and the second heat exchanger 31 become equal. Then the first valve V4, the second valve V6, the fourth valve V20 and the fifth valve V21 are opened, and the first valves V1, V7, V10, V13, V16, the second valves V3, V9, V12, V15, V18 and the equalizing valves V2, V5, V8, V11, V14, V17 are closed. At this time, the pressure at the right side of the primary piston 501 is higher than that at the left side, and the primary piston 501 moves left together with the first and the second piston 521. As described above, when the pistons integrally move left, the first compressor 51 inputs high-pressure gas into the pressure-storing apparatus 600. As shown in Fig.3, another stroke ends when the primary piston 501 arrives at the left side of the primary cylinder 50, and till then an operation cycle completes. Such cycle continues until the first valve V1 and the second valve V3 are opened again, i.e. the first heat exchanger 21 and the second heat exchanger 31 are used again.

It should be understood that the invention is not limited to the above exemplary operating process, and other operating processes may also be employed without departing from the principle of the invention. For example, more than one first heat exchanger and more than one corresponding second heat exchanger may be opened simultaneously, or all of the first heat exchangers and the second heat exchangers may be opened simultaneously. At this time, corresponding opening and closing of the valves should be performed.

In performing the above operations, when high-pressure gas is produced in the primary cylinder assembly 5, the high-pressure gas is initially input into the left high-pressure gasholder 6 shown in drawings, that is to say, the ninth valve 25 at the inlet of the left high-pressure gasholder 6 is opened first at the beginning. Subsequently, when the gas pressure in the left high-pressure gasholder 6 reaches a predetermined value, the ninth valve 25 at the inlet of the left high-pressure gasholder 6 is closed and the tenth valve 26 at the outlet of the left high-pressure gasholder 6 is opened, and the ninth valve 25 at the inlet of the middle high-pressure gasholder 6 is opened. At this time, the left high-pressure gasholder 6 transfers high-pressure gas to the downstream energy-producing apparatus, and the high-pressure gas produced in the primary cylinder assembly 5 flows into the middle high-pressure gasholder 6. By analogy, when the middle high-pressure gasholder 6 transfers high-pressure gas to the downstream energy-producing apparatus, high-pressure gas produced in the primary cylinder assembly 5 flows into the right high-pressure gasholder 6. Therefore, as the heat exchangers described above, the high-pressure gasholders 6 may be circularly and continuously used to ensure continuous and steady transferring of high-pressure gas into the downstream energy-producing apparatus. It should be noted that since the pressure-storing apparatus 600 may includes a number of high-pressure gasholders 6, more than one high-pressure gasholder 6 may be opened simultaneously without any affect on the continuous circular operations. All high-pressure gasholders 6 may be opened simultaneously as well. Accordingly, in the case that all high-pressure gasholders 6 are opened simultaneously, the device of the invention needs to be suspended when gas pressures in the high-pressure gasholders 6 reach a predetermined value. The device of the invention cannot be restarted until much of the high-pressure gas in the high-pressure gasholders 6 is transferred to the downstream energy-producing apparatus. Hence, this operation mode cannot ensure high-pressure gas to be transferred continuously.

Additionally, at downstream of the high-pressure gasholders 6, when the tenth valve 26 at the outlet of the high-pressure gasholders 6 is opened, the auxiliary cylinder assembly 7 drives the hydraulic motor to rotate by means of pressurizing liquid under the action of high-pressure gas, or the pneumatic motor rotates directly under the action of high-pressure gas in the high-pressure gasholders 6, and finally drives the generator to rotate and generate electricity.

### Automatic control

In a preferred embodiment, the device of the invention further includes an electronic control unit (not shown) for controlling the first to tenth valves, which may be for example any well-known type of electronic control assembly used in a vehicle. There are position sensors (not shown) arranged at both the left side of the first compressor 51 and the right side of the second compressor 52. When the primary piston 501 moves together with the first piston 511 and the second piston 521 to the left side, the position sensor at the left side sends a control signal to the electronic control unit such that the electronic control unit sequentially performs the following operations: closing one or more of the first valves and corresponding one or more of the second valves; closing the fourth valve V20 and the fifth valve V21; opening corresponding one or more of the equalizing valves; closing the corresponding equalizing valve ; opening the third valve V19 and the sixth valve V22, and opening the next one or more of the first valves and the next corresponding one or more of the second valves. When the primary piston 501 moves together with the first piston 511 and the second piston 521 to the right side, the position sensor at the right side send a control signal to the electronic control unit such that the electronic control unit sequentially performs the following operations: closing one or more of the first valves and corresponding one or more of the second valves; closing the third valve V19 and the sixth valve V22; opening corresponding one or more of the equalizing valves; closing the corresponding equalizing valve; opening the fourth valve V20 and the fifth valve V21, and opening the next one or more of the first valves and the next corresponding one or more of the second valves. Therefore, appropriate opening and closing of respective valves may be achieved at the end of a one-way stroke, such that the device may continuously operate and energy may be output steadily.

In another more preferred embodiment, the electronic control unit is a programmable logic device (PLC), and the position sensor is a limit switch. The programmable logic device may be any well-known programmable logic controller, and the limit switch may be for example a reed contact electromagnetic system, etc.

In a preferred embodiment, each high-pressure gasholder 6 is provided with a pressure sensor (not shown). When the pressure in at least one high-pressure gasholder 6 in operating state reaches a predetermined value, the pressure sensor of the high-pressure gasholder 6 with the pressure reaching the predetermined value sends a control signal to the electronic control unit, such that the electronic control unit sequentially performs the following operations: closing the ninth valve 25 at the inlet of the high-pressure gasholder 6 with the pressure reaching the predetermined value; opening the tenth valve 26 at the outlet of the high-pressure gasholder 6 with the pressure reaching the predetermined value; opening the ninth valve 25 at the inlet of at least one high-pressure gasholder 6 other than the high-pressure gasholder 6 with the pressure reaching the predetermined value. For example, at the beginning of operation, only the ninth valve 25 at the inlet of the left high-pressure gasholder 6 is opened, such that the high-pressure gas produced in the primary cylinder assembly 5 only flows into the left high-pressure gasholder 6. Next, when the gas pressure in the left high-pressure gasholder 6 reaches the predetermined value, in response to the pressure sensor of the left high-pressure gasholder 6, the electronic control unit: closes the ninth valve 25 at the inlet of the left high-pressure gasholder 6, opens the tenth valve 26 at the outlet of the left high-pressure gasholder 6 such that the high-pressure gas therein drives the downstream energy-producing apparatus and opens the ninth valve 25 at the inlet of the middle or the right high-pressure gasholder 6. By analogy, circularly continuous operations may be performed to ensure continuous and steady supply of high-pressure gas to the downstream energy-producing apparatus. It should be understood that since the pressure-storing apparatus 600 may include a number of high-pressure gasholders 6, ninth valves 25 of more than one high-pressure gasholder 6 may be opened simultaneously, and the object of circularly continuously operating may also be achieved in this case.

In another preferred embodiment, a pressure switch (not shown) is provided at the inlet of each high-pressure gasholder 6, and each ninth valve 25 keeps always open. When the pressure in at least one high-pressure gasholder 6 in operating state reaches a predetermined value, the pressure switch at the inlet of the high-pressure gasholder 6 with the pressure reaching the predetermined value closes automatically and at the same time sends a control signal to the electronic control unit , such that the electronic control unit sequentially performs the following operations: opening the tenth valve 26 at the inlet of the high-pressure gasholder 6 with the pressure reaching the predetermined value; opening the pressure switch at the inlet of at least one high-pressure gasholder 6 other than the high-pressure gasholder 6 with the pressure reaching the predetermined value. Similarly to the above embodiment, the pressure switches at the inlets of more than one high-pressure gasholder 6 may be opened simultaneously, and continuous input and output of high pressure gas may also be achieved in this case. It may be seen that since each ninth valve 25 keeps always open in this embodiment, the ninth valves 25 in this embodiment is only used to switch the gas flow on/off in case of maintenance or emergency.

Additionally, the left side of the third compressor 71 and the right side of the fourth compressor 72 may also be arranged with limit switches. When the auxiliary piston 701 moves together with the third piston 711 and the fourth piston 721 to the left side, the programmable logic controller opens the seventh valve V23 and closes the eighth valve V24 in response to the left limit switch. When the auxiliary piston 701 moves together with the third piston 711 and the fourth piston 721 to the right side, the programmable logic controller opens the eighth valve V24 and closes the seventh valve V23 in response to the right limit switch. As such the hydraulic motor 8 may be continuously driven to make the energy output steadier.

### Industrial applicability

The device of the invention may function either as a fixed device in buildings, factories and supermarkets, or as a movable unit in cars, ships and trucks. For example, on one hand, when used in various buildings, the device of the invention may function as a separate electricity generating system in the buildings to power the buildings. On the other hand, when used in vehicles such as cars, the device of the invention may function as a power source for the driving system of the vehicles, and may function as a power source for the braking system and steering system of the vehicles as well.

Experiments show that in the device of the invention, when the primary cylinder assembly 5 produces high-pressure gas, a high temperature may be produced by compressing the high-pressure gas, which may be at highest up to 280°C; when high-pressure gas in the high-pressure gasholder 6 is transferred to the downstream energy-producing apparatus, cooling phenomenon may be produced by releasing the high-pressure gas, the temperate of which may be at lowest down to -55°C. Therefore, when the primary cylinder assembly 5 produces high-pressure gas, hot air may be obtained for example from point A shown in Fig.1, and the hot air may be transferred to the upstream high-pressure gas producing component through gas pipeline (not shown) to serve as a hot fluid source for heating the first heat exchanger by heat exchange. The hot air may also function as a heating system in buildings or vehicles, or may be used to heat water by a heat exchanger. When high-pressure gas in the high-pressure gasholder 6 is transferred to the auxiliary cylinder assembly 7, cool air may be obtained from the point B shown in Fig.1, and the cool air may be transferred to the upstream low-pressure gas producing component through gas pipeline (not shown) to serve as a cool fluid source for cooling the second heat exchanger by heat exchange. The cool air may also be used in air-condition systems in buildings and vehicles. As such, on one hand it may not only prevent the primary cylinder assembly from overheating but also prevent the auxiliary cylinder assembly from overcooling; on the other hand it may recycle the hot air and cool air to further enable effective usage of energy.

## Claims

1. A device for producing energy through temperature difference of fluids, comprising:
a gas pressure difference producing apparatus (100) for producing a difference in gas pressure by using a heat source;
a high-pressure gas producing apparatus (500) connected with the gas pressure difference producing apparatus (100) via gas pipeline, the high-pressure gas producing apparatus (500) producing high-pressure gas through the difference in gas pressure from the gas pressure difference producing apparatus (100);
a pressure-storing apparatus (600) connected with the high-pressure gas producing apparatus (500) via gas pipeline, the pressure-storing apparatus (600) storing the high-pressure gas produced from the high-pressure gas producing apparatus (500); and
an energy-producing apparatus (700) connected with the pressure-storing apparatus (600) via gas pipeline, the energy-producing apparatus (700) producing the energy through the high-pressure gas stored in the pressure-storing apparatus (600).

2. The device for producing energy through temperature difference of fluids of claim 1, wherein the heat source is a hot fluid source, and the gas pressure difference producing apparatus (100) comprises:
a high-pressure gas producing component (10) comprising at least one hot fluid source and at least one first heat exchanger, wherein each of the at least one hot fluid source is connected to a corresponding one of the at least one first heat exchanger, the first heat exchanger is filled with pressurized gas, and each of the at least one first heat exchanger is connected to the high-pressure gas producing apparatus via a first valve and through a first common gas pipeline (P1);
a low-pressure gas producing component (20) comprising at least one cool fluid source and at least one second heat exchanger, wherein each of the at least one cool fluid source is connected to a corresponding one of the at least one second heat exchanger, the second heat exchanger is filled with pressurized gas, and each of the at least one second heat exchanger is connected to the high-pressure gas producing apparatus via a second valve and through a second common gas pipeline (P2);
wherein in operating state, each of the at least one hot fluid source heats each of the at least one first heat exchanger connected thereto, so as to pressurize the gas in each of the at least one first heat exchanger, and each of the at least one cool fluid source cools each of the at least one second heat exchanger connected thereto, so as to depressurize the gas in each of the at least one second heat exchanger, such that the difference in gas pressure is formed between the high-pressure gas producing component and the low-pressure gas producing component.

3. The device for producing energy through temperature difference of fluids of claim 2, wherein the high-pressure gas producing apparatus (500) is a primary cylinder assembly (5), and the primary cylinder assembly (5) comprises:
a primary cylinder (50) with a primary piston (501) arranged therein, the primary cylinder (50) being connected to the first common gas pipeline (P1) via a third valve (V19) or a fourth valve (V20), and being connected to the second common gas pipeline (P2) via a fifth valve (V21) or a sixth valve (V22), wherein the third valve (V19) and the fifth valve (V21) are connected to a left side of the primary piston (501), and the fourth valve (V20) and the sixth valve (V22) are connected to a right side of the primary piston (501);
a first compressor (51) arranged to be integrally connected to a left side of the primary cylinder (50) and provided with a first piston (511), wherein the first compressor (51) is adapted to output high-pressure gas when the first piston (511) moves left;
a second compressor (52) arranged to be integrally connected to a right side of the primary cylinder (50) and provided with a second piston (521), wherein the second compressor (52) is adapted to output high-pressure gas when the second piston (521) moves right, and wherein the second compressor (52) is connected to the pressure-storing apparatus (600) via one-way valve at a right side of the second piston (521), such that high-pressure gas can only flow into the pressure-storing apparatus (600) in one-way;
an air filter (13) connected to a left side of the first compressor (51) via one-way valve such that outside air filtered by the air filter (13) flows into the first compressor (51) in one-way,
wherein the primary piston (501) is arranged to be integrated with the first piston (511) and the second piston (521) through a first linkage (L1), the first linkage (L1) is arranged to pass through a side wall of the primary cylinder (50) in an airtight manner, and wherein the first compressor (51) is connected at a left side of the first piston (511) to the right side of the second piston (521) of the second compressor (52) via one-way valve, such that gas can only flow in one-way from the left side of the first compressor (51) to the right side of the second compressor (52).

4. The device for producing energy through temperature difference of fluids of claim 3, wherein the pressure-storing apparatus (600) comprises at least one high-pressure gasholder (6), and a ninth valve (25) and a tenth valve (26) are arranged at an inlet and an outlet of each of the at least one high-pressure gasholder (6) respectively.

5. The device for producing energy through temperature difference of fluids of claim 4, wherein the energy-producing apparatus (700) is a pneumatic motor, and wherein the pneumatic motor is connected to the high-pressure gasholder (6) via a pressure regulating apparatus arranged downstream of the high-pressure gasholder (6), such that the pneumatic motor is rotated by high-pressure gas stored in the high-pressure gasholder (6).

6. The device for producing energy through temperature difference of fluids of claim 4, wherein the energy-producing apparatus (700) comprises:
an auxiliary cylinder assembly (7) connected to the high-pressure gasholder (6) via gas pipeline for converting gas pressure in the high-pressure gasholder (6) into hydraulic pressure, the auxiliary cylinder assembly (7) comprising:
an auxiliary cylinder (70) in which an auxiliary piston (701) is arranged, wherein the auxiliary cylinder is connected to the high-pressure gasholder (6) via a seventh valve (V23) and a eighth valve (V24), the seventh (V23) is connected to a left side of the auxiliary piston (701) and the eighth valve (V24) is connected to a right side of the auxiliary piston (701);
a third compressor (71) arranged to be connected to a left side of the auxiliary cylinder (70) in an airtight manner and provided with a third piston (711), wherein the third compressor (71) is adapted to output pressurized liquid when the third piston (711) moves left;
a fourth compressor (72) arranged to be connected to a right side of the auxiliary cylinder (70) in an airtight manner and provided with a fourth piston (721), wherein the fourth compressor (72) is adapted to output pressurized liquid when the fourth piston (721) moves left,
a hydraulic motor (8) connected to the auxiliary cylinder assembly (7), the hydraulic motor (8) being rotated by the pressurized liquid output from the auxiliary cylinder assembly (7),
wherein the auxiliary piston (701) is arranged to be integrated with the third piston (711) and the fourth piston (721) through a second linkage (L2), the second linkage (L2) is arranged to pass through a side wall of the auxiliary cylinder (70) in an airtight manner.

7. The device for producing energy through temperature difference of fluids of claim 6, wherein the energy-producing apparatus (700) further comprises a generator (9) arranged downstream of the hydraulic motor (8), and the hydraulic motor (8) drives the generator (9) to rotate and generate electricity.

8. The device for producing energy through temperature difference of fluids of claim 7, wherein a first cycle pump (CP1) is arranged between each of the at least one first heat exchanger and each of the at least one hot fluid source connected with the first heat exchanger, the first cycle pump (CP1) is to make hot fluid in the hot fluid source circularly flow into the first heat exchanger; and wherein a second cycle pump (CP2) is arranged between each of the at least one second heat exchanger and each of the at least one cool fluid source connected with the second heat exchanger, the second cycle pump (CP2) is to make cool fluid in the cool fluid source circularly flow into the second heat exchanger.

9. The device for producing energy through temperature difference of fluids of any one of claims 2-8, wherein the hot fluid in the hot fluid source is hot water from a solar collector or cooling water for cooling from a power plant; and the cool fluid in the cool fluid sources is cool water in an underground cooling battery for buildings.

10. The device for producing energy through temperature difference of fluids of any one of claims 4-8, wherein each of the at least one first heat exchanger and each of the at least one second heat exchanger are connected to the high-pressure gasholder (6) via one-way valves, in order to fill the first heat exchanger and the second heat exchanger with gas in an initial state and when leakage occurs.

11. The device for producing energy through temperature difference of fluids of claim 9, wherein each of the at least one first heat exchanger and each of the at least one second heat exchanger are connected to the high-pressure gasholder (6) via one-way valves, in order to fill the first heat exchanger and the second heat exchanger with gas in an initial state and when leakage occurs.

12. The device for producing energy through temperature difference of fluids of any one of claims 2-8, wherein the device further comprises an equalizing valve connected between each of the at least one first heat exchanger and each corresponding one of the at least one second heat exchanger, the equalizing valve is adapted to make gas pressure in each of the at least one first heat exchanger equal to gas pressure in each corresponding one of the at least one second heat exchanger after the primary piston (501) in the primary cylinder (50) completes a stroke.

13. The device for producing energy through temperature difference of fluids of claim 9, wherein the device further comprises an equalizing valve connected between each of the at least one first heat exchanger and each corresponding one of the at least one second heat exchanger, the equalizing valve is adapted to make gas pressure in each of the at least one first heat exchanger equal to gas pressure in each corresponding one of the at least one second heat exchanger after the primary piston (501) in the primary cylinder (50) completes a stroke.

14. The device for producing energy through temperature difference of fluids of any one of claims 2-8, wherein the high-pressure gas output from the first compressor (51) has a pressure of 60 bars; and the high-pressure gas output from the second compressor (52) has a pressure of 200 bars.

15. The device for producing energy through temperature difference of fluids of claim 12, wherein the device further comprises an electronic control unit for controlling the first to the tenth valves, position sensors are arranged at a left side of the first compressor (51) and a right side of the second compressor (52), and
when the primary piston (501) moves together with the first piston (511) and the second piston (521) to the left side, the position sensor at the left side sends a control signal to the electronic control unit such that the electronic control unit sequentially performs following operations:
closing one or more of the first valves and corresponding one or more of the second valves;
closing the fourth valve V20 and the fifth valve V21;
opening corresponding one or more of the equalizing valves;
closing the corresponding one or more of the equalizing valves;
opening the third valve V 19, the sixth valve V22, and opening next one or more of the first valves and corresponding next one or more of the second valves;
and when the primary piston (501) moves together with the first piston (511) and the second piston (521) to the right side, the position sensor at the right side sends a control signal to the electronic control unit such that the electronic control unit sequentially performs following operations:
closing one or more of the first valves and corresponding one or more of the second valves;
closing the third valve V19 and the sixth valve V22;
opening corresponding one or more of the equalizing valves;
closing the corresponding one or more of the equalizing valves; and
opening the fourth valve V20, the fifth valve V21, and opening the next one or more of the first valves and corresponding next one or more of the second valves.

16. The device for producing energy through temperature difference of fluids of claim 15, wherein the electronic control unit is a programmable logic device (PLC), and the position sensor is a limit switch.

17. The device for producing energy through temperature difference of fluids of claim 15, wherein each of the at least one high-pressure gasholder (6) is provided with a pressure sensor, and when pressure in at least one high-pressure gasholder (6) in operating state reaches a predetermined value, the corresponding pressure sensor sends a control signal to the electronic control unit, such that the electronic control unit sequentially performs following operations:
closing the ninth valve (25) at the inlet of the high-pressure gasholder (6) with pressure reaching the predetermined value;
opening the tenth valve (26) at the outlet of the high-pressure gasholder (6) with pressure reaching the predetermined value;
opening the ninth valve (25) at the inlet of at least one high-pressure gasholder (6) other than the high-pressure gasholder (6) with pressure reaching the predetermined value.

18. The device for producing energy through temperature difference of fluids of claim 15, wherein a pressure switch is arranged at the inlet of each of the at least one high-pressure gasholder (6)and each ninth valve (25) keeps always open, and when pressure in at least one high-pressure gasholder (6) in operating state reaches a predetermined value, the corresponding pressure switch automatically closes and at the same time sends a control signal to the electronic control unit, such that the electronic control unit sequentially performs following operations:
opening the tenth valve (26) at the inlet of the high-pressure gasholder (6) with pressure reaching the predetermined value; and
opening the pressure switch at the inlet of at least one high-pressure gasholder (6) other than the high-pressure gasholder (6) with pressure reaching the predetermined value.

19. The device for producing energy through temperature difference of fluids of any one of claims 6-8, wherein the device further comprises an electronic control unit for controlling the first to the tenth valves, and limit switches are arranged at a left side of the third compressor (71) and a right side of the fourth compressor (72), and when the auxiliary piston (701) moves together with the third piston (711) and the fourth piston (721) to the left side, the programmable logic controller opens the seventh valve (V23) and closes the eighth valve (V24) in response to the limit switch at the left side; when the auxiliary piston (701) moves together with the third piston (711) and the fourth piston (721) to the right side, the programmable logic controller opens the eighth valve (V24) and closes the seventh valve (V23) in response to the limit switch at the right side.
